(19) Europäisches Patentamt
European Patent Office
Office européen des brevets

(11) **EP 3 516 358 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(21) Anmeldenummer: **17801592.1**

(22) Anmeldetag: **25.09.2017**

(51) Int Cl.:
***G01L 27/00*** *(2006.01)*

(86) Internationale Anmeldenummer:
**PCT/EP2017/001137**

(87) Internationale Veröffentlichungsnummer:
**WO 2018/054540 (29.03.2018 Gazette 2018/13)**

(54) **VORRICHTUNG UND VERFAHREN ZUR DYNAMISCHEN KALIBRIERUNG VON DRUCKSENSOREN**

DEVICE AND METHOD FOR DYNAMICALLY CALIBRATING PRESSURE SENSORS

DISPOSITIF ET PROCÉDÉ D'ÉTALONNAGE DYNAMIQUE DE CAPTEURS DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2016 DE 102016118048**

(43) Veröffentlichungstag der Anmeldung:
**31.07.2019 Patentblatt 2019/31**

(73) Patentinhaber: **Spektra Schwingungstechnik Und Akustik GmbH**
**Dresden**
**01189 Dresden (DE)**

(72) Erfinder:
• **PLATTE, Thomas**
**01309 Dresden (DE)**

• **BRUCKE, Martin**
**01309 Dresden (DE)**
• **IWANCZIK, Martin**
**01219 Dresden (DE)**

(74) Vertreter: **Lippert Stachow Patentanwälte Rechtsanwälte Partnerschaft mbB**
**Krenkelstraße 3**
**01309 Dresden (DE)**

(56) Entgegenhaltungen:
**WO-A1-2013/110255    DE-A1-102009 027 624**
**US-A- 3 590 626**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung gemäß Anspruch 1 zur dynamischen Kalibrierung von Drucksensoren mit einem Gehäuse, einem mit dem Gehäuse verbundenen Zylinder zur Aufnahme eines Fluids, der über eine erste Öffnung mit einem ersten Drucksensor, der damit mit dem Fluid in Kontakt steht, verbindbar ist, einem Aktor und einem mit dem Zylinder zusammenwirkenden Kolben. Dabei ist der Aktor zwischen Gehäuse und einer vom Zylinder abgewandten Seite des Kolbens angeordnet.

Der eingesetzte Aktor wandelt dabei ein Eingangssignal in eine mechanische Bewegung um. Beispielsweise kann es sich dabei um einen piezoelektrischen Aktor handeln, der sich bei Anlegen einer Spannung mechanisch verformt. Diese mechanische Verformung kann dann als mechanische Bewegung auf den Kolben übertragen werden.

Die Erfindung betrifft auch ein Verfahren zur dynamischen Kalibrierung von Drucksensoren gemäß der Vorrichtung nach Anspruch 1, bei dem ein den auf einen Drucksensor einwirkenden Druck repräsentierender Istparameter gemessen und mit einem entsprechenden Sollparameter verglichen wird. Aus dem Vergleich wird ein Kalibrierwert c für den Istparameter ermittelt, wobei der Druck mittels eines mit einem Zylinder, der mit einem Fluid gefüllt ist, zusammenwirkenden Kolbens erzeugt wird.

Ein Drucksensor der hier infrage kommenden Art dient der Ermittlung eines Druckes eines Fluids. Er kann beispielsweise eingesetzt werden, um den Öldruck oder den Bremsflüssigkeitsdruck in Kraftfahrzeugen zu ermitteln. Dabei wird bei dem Drucksensor an seinem Ausgang eine dem Druck entsprechende physikalische Ausgangsgröße, beispielsweise ein dem Druck entsprechender Wert einer elektrischen Spannung erzeugt.

Herstellungsbedingt kann das Verhältnis von Druck zu Ausgangsgröße von Drucksensor zu Drucksensor verschieden sein. Das betrifft sowohl statische Verhältnisschwankungen, das unterschiedliche Verhalten bei verschiedenen statischen Drücken, als auch Unterschiede im dynamischen Verhalten, d.h. Unterschiede zwischen verschiedenen Drucksensoren hinsichtlich ihres Frequenzganges bei dynamisch ändernden Drücken.

Um zu einer richtigen Beurteilung der Ausgangsgröße zu gelangen, bedarf es daher einer Kalibrierung des Drucksensors sowohl hinsichtlich seines statischen als auch seines dynamischen Verhaltens. Die nachfolgend beschriebene Erfindung betrifft eine Kalibrierung des dynamischen Verhaltens von Drucksensoren.

Unter Kalibrierung wird ein Verfahren verstanden, bei dem in einem ersten Schritt die Abweichung eines Sensors von einem Normal ermittelt wird, um in einem zweiten Schritt die ermittelte Abweichung bei der anschließenden Benutzung des Sensors zur Korrektur der von ihm ermittelten Werte zu verwenden.In der US 3 590 626 A, die sich auf eine Sekundärkalibrierung bezieht, ist ein Kalibrator beschrieben, bei dem ein mit einem Fluid gefüllter Zylinder vorgesehen ist. Mit diesem Zylinder ist sowohl ein Test-Drucksensor als auch ein Referenz-(Standard-) Sensor verbunden. Auf diesen Zylinder wirkt ein gegen die Umgebungsatmosphäre abgedichteter Kolben. Dieser Kolben kann mittels eines Stopfens über eine Feder gegenüber dem Gehäuse vorgespannt werden und damit der Fluid-Druck in dem Zylinder vorjustiert werden. Die Schwingungsmasse ist einerseits mit dem Kolben und andererseits mit einem Montagestift mit einem Accelerometer fest verbunden.

Mit dem Kolben ist auch eine Schwingungsmasse verbunden. Diese Schwingungsmasse wird erregt, wenn der Kalibrator auf einem Shakertisch befestigt wird.

Eine Schwingungserregung durch den Shaker wird von dem Accelerometer gemessen. Dann wird das von dem ReferenzSensor entnommene Signal mit dem Signal des Testsensors verglichen und es kann aus diesem Vergleich eine schwingungsabhängige Kalibrierfunktion für den Testsensor abgeleitet werden.

Bei dieser Lösung ist stets ein externer Aktor erforderlich, wodurch durch die stets zu schaffende Verbindung zu dem Aktor Kalibrierungsfehler entstehen. Darüber hinaus ist der Aktor, den man wohl in dem Shaker erkennen muss nicht mit dem Kolben verbunden. Außerdem ist der Raumbedarf recht erheblich.

In der DE 10 2009 027 624 A1 wird eine Vorrichtung zur dynamischen Kalibrierung von Drucksensoren, ebenfalls über eine Sekundärkalibrierung, beschrieben, die ein Gehäuse, einen mit dem Gehäuse verbundenen Zylinder (Innenraum der Prüfkammer) zur Aufnahme eines Fluids, einen Aktor (elektrischer Antrieb) und einen mit dem Zylinder zusammenwirkenden Kolben aufweist. Ein Drucksensor ist über eine Öffnung (Aufnahme mit Adapter) mit dem Zylinder verbindbar. Damit ist der Drucksensor mit dem Fluid kontaktierbar. Dabei ist der Aktor außerhalb des Gehäuses angeordnet und als Tauchspulenaktuator ausgeführt.

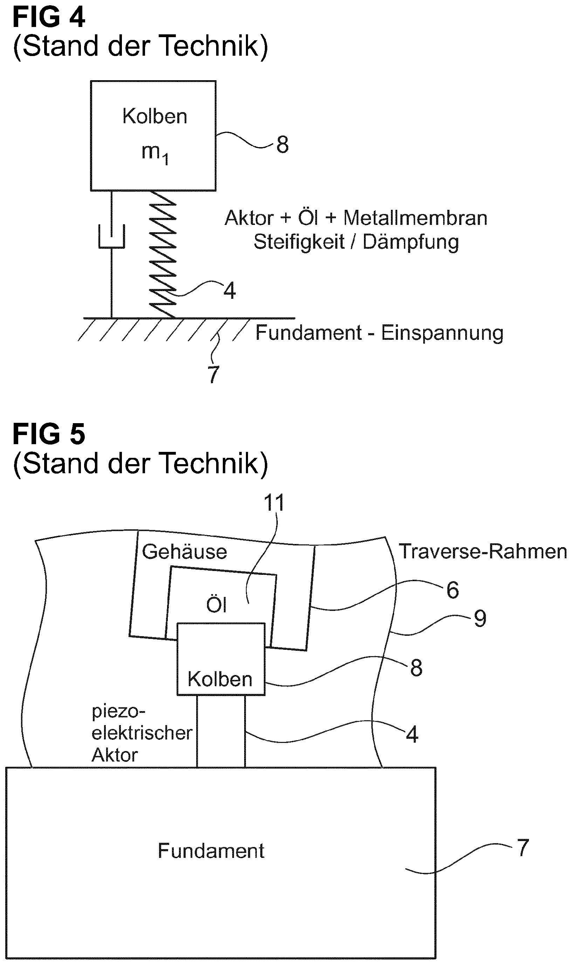

Zum einen verbietet diese Ausführung als Tauchspulenaktuator es, den Aktor innerhalb des Gehäuses anzuordnen. Zum anderen ist die Prüfkammer nun über einen massiven Rahmen mit einer größeren Masse (Tauchspulenaktor und Rahmen) verbunden. Dies entspricht der Gestaltung, die mit Fig. 4 und der zugehörigen Textpassage in dieser Patentanmeldung beschrieben ist.

Die WO 2013/110255 A1 sieht eine Vorrichtung zur dynamischen Kalibrierung von Drucksensoren, ebenfalls über eine Sekundärkalibrierung vor. Dabei ist ein Zylinder (Pumpe) zur Aufnahme eines Fluids, ein Aktor (Antrieb) und ein mit dem Zylinder zusammenwirkenden Kolben (Pumpe) vorgesehen. Der Aktor wirkt auf den Kolben. Der Zylinder der Pumpe ist über eine entsprechende Druckleitung mit einem zu kalibrierenden Drucksensor verbindbar.

Diese Gestaltung zeigt keine Lösung der aufgezeigten Probleme des Standes der Technik.

Bekannt ist eine dynamische Kalibrierung von Schwingungssensoren, u.a. durch das Dienstleistungsangebot der Anmelderin. Dabei wird ein zu kalibrierender Schwingungssensor mit schmal- oder breitbandigen Signalen angeregt. Bei der schmalbandigen Anregung werden die Schwingungssensoren mit einem möglichst ungestörten sinusförmigen Signal angeregt. Bei der breitbandigen Anregung werden die Schwingungssensoren in der Regel mit Stößen angeregt.

Bei der Anregung mit sinusförmigen Signalen kann die Antwort, beispielsweise der Spannungsausgang U des Schwingungssensors gemessen werden. Dieser wird mit der bekannten Anregung, d.h. der Beschleunigung a, ins Verhältnis gesetzt und man erhält die Empfindlichkeit des Sensors

$$S = \frac{U}{a} = \left[\frac{V}{m/s^2}\right]$$

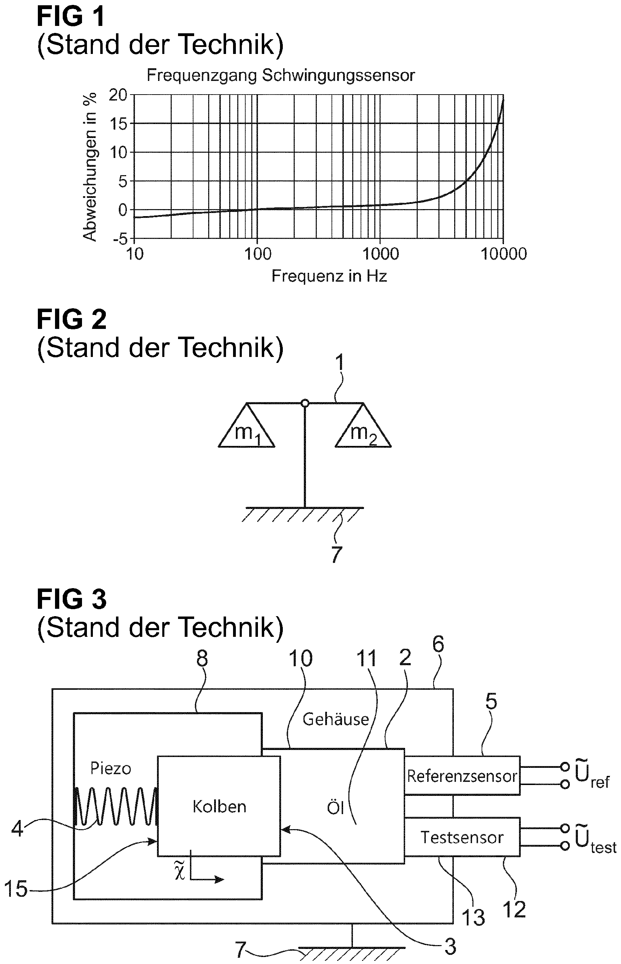

Auf Grund des Konstruktionsprinzips des Schwingungssensors ist diese ist jedoch abhängig von der Frequenz. Wird die Frequenz der Anregung variiert, kann der Frequenzgang des Schwingungssensors aufgenommen werden, wie er in Fig. 1 dargestellt ist. Der Frequenzgang hilft zu bewerten, bis zu welcher Frequenz der Schwingungssensor in einer realen Messanwendung verwendet werden kann und ab welcher Frequenz mit Abweichungen der gemessenen Werte zu rechnen ist.

In der Metrologie unterscheidet man zwischen zwei Arten der Kalibrierung, der Sekundär- und Primärkalibrierung.

Die bekannte Ermittlung des Frequenzganges eines Schwingungssensors erfolgt durch eine Primärkalibrierung.

Bei der Primärkalibrierung wird die gesuchte physikalische Größe aus anderen Größen heraus berechnet. Soll beispielsweise die Masse einer Flüssigkeit primär bestimmt werden, so kann deren Dichte $\rho$ gemessen oder als Materialkonstante aus Tabellen ermittelt werden und das Volumen V der Flüssigkeit gemessen werden. Über die Gleichung

$$m = V \cdot \rho$$

kann die Masse m berechnet werden. Die in die Gleichung eingehenden Größen sind dabei im Allgemeinen sehr genau bestimmbar und sorgen dafür, dass die zu ermittelnde Größe sehr genau berechnet werden kann.

Bei einer Sekundärkalibrierung werden lediglich zwei Größen mit einander verglichen. Es handelt sich also um eine Vergleichskalibrierung. Dies bedeutet für das in Fig. 2 dargestellte Beispiel, dass die Verwendung einer Balkenwaage zur Bestimmung der gesuchten Masse $m_2$ eine Vergleichsmessung ist. Steht der obere Balken 1 horizontal, bedeutet dies bei gleichlangen Hebelarmen, dass die Masse $m_2$ so groß ist wie die bekannte Masse $m_1$. Die Masse m2 ist dann bestimmt und kann mit den Toleranzen des Messsystems mit

$$m_2 = m_1$$

angegeben werden.

Für die Ermittlung des Frequenzganges von Drucksensoren ist eine solche Sekundärkalibrierung bekannt.

Hierfür sind dynamische Druckerzeuger bekannt, die stets mit einem Vergleichssensor ausgestattet sind und damit der Sekundärkalibrierung, wie oben beschrieben, dienen. Ein solcher dynamischer Druckerzeuger ist aus mehreren Veröffentlichungen bekannt, wie

- Kuhn; Werthschützky: Analysis of Dynamic Charatkeristics of Pressure Sensors, EMK TU Darmstadt,
- Stefan Sindlinger: Einfluss der Gehäusung auf die Messunsicherheit von mikrogehäusten Drucksensoren mit piezoresistivem Messelement, Dissertation, EMK TU Darmstadt, 2007
- Sven Kuhn: Messunsicherheit elektromechanischer Wirkprinzipien zur Druckmessung und Optimierung von Verfahren zur Fehlerkorrektur, Dissertation, EMK TU Darmstadt, 2001
- Timo Kober: Analyse des Übertragungsverhaltens von Differenzdrucksensoren durch dynamische Druckkalibrierung, Artikel Technisches Messen 2/2010,
- Luca Tomasi: A new micromachined piezoresistive pressure sensor with dual range and self-test functionalities, Dissertation, 2007 oder
- Adam Hurst: An Experimental Frequency Response Characterization of MEMS Piezoresistive Pressure Transducers, Proceedings of ASME Turbo Expo 2014: Turbine Technical Conference and Exposition, 2014

Diese Lösungen können in der Darstellung gemäß Fig. 3 schematisch zusammengefasst werden.

Hierin wird in einem Kontrollvolumen 2 über eine Membran 3 ein Druck p erzeugt. An diese Membran 3 ist über einen Kolben 8 ein piezoelektrischer Aktor 4 angeschlossen. Wird an den piezoelektrischen Aktor 4 eine Spannung angelegt, dehnt sich dieser aus. Die Ausdehnung bewirkt eine Verschiebung der Membran 3. Die Membran 3 komprimiert das Öl, mit dem das Kontrollvolumen 2 gefüllt ist, und sorgt für einen Druckanstieg.

Aufgrund der Eigenschaften des piezoelektrischen Aktors 4 können mit diesem Verfahren die oben beschriebenen Entwicklungsziele erfüllt werden. Die Frequenz des erzeugten Drucks p kann über die Frequenz der angelegten Aktorspannung variiert werden. Die Amplitude des Drucks p kann über die Amplitude der Spannung gesteuert werden.

Wie bereits beschrieben, ist auch in dieser Anordnung ein Vergleichssensor 5 vorgesehen. Der Vergleichssensor 5 hat eine unbekannte Dynamik. Auf Grund seiner Konstruktion wird dem Vergleichssensor 5 jedoch eine sehr gute Dynamik unterstellt. Bezogen auf Fig. 1 bedeutet dies, dass die Abweichung der Empfindlichkeit über alle Frequenzen hin 0% entspricht. Der Bezugswert ist die statisch ermittelte Empfindlichkeit des Vergleichssensors 5.

Neben der Tatsache, dass der bekannte Druckerzeuger für eine Sekundärkalibrierung vorgesehen ist, hat es sich gezeigt, dass die Konstruktion, die vorsieht, dass sich das Gehäuse in Ruhe befindet, also fest mit einem Fundament verbunden ist, dazu führt, dass das Gehäuse unkontrollierte und starke Schwingungen ausübt, woraus sich der Einsatz für eine Primärkalibrierung, bei der Druck p berechnet werden muss, infolge des großen Störeinflusses auf die Druckberechnung verbietet. Wie in dem mechanischen Ersatzschaltbild gemäß Fig. 4 dargestellt ist, ist das Gehäuse 6 fest mit einem Fundament 7 verbunden. Damit soll erreicht werden, dass nur eine Bewegung des Kolbens 8 möglich ist. Die Bewegung auf Gegenseite des Kolbens 8 und des Gehäuses 6 soll durch das Fundament 7 und die Verbindung des Gehäuses 6 zum Fundament 7, beispielsweise über eine die Traverse 8, unterbunden werden. Das Fundament 7 hat dabei eine Masse, die mindestens eine Größenordnung größer als die Masse des Gehäuses 6 ist.

Wie in Fig. 5 schematisch dargestellt, schwingen praktisch aber auch die Masse des Gehäuses 6 und Traverse 9 mit. Dies geschieht sehr unkontrolliert und eignet sich deshalb nicht für eine Primärkalibrierung.

Für das dynamische Verhalten von Drucksensoren ist kein standardisiertes Primärkalibrierverfahren bekannt. Demnach existiert auch kein dynamisch kalibriertes Drucknormal, welches für eine Sekundärkalibrierung verwendet werden könnte.

Es ist somit Aufgabe der Erfindung, eine verfahrens- und vorrichtungsseitige Lösung anzugeben, welche eine Primärkalibrierung des dynamischen Verhaltens eines Drucksensors ermöglicht.

Die Aufgabe wird durch eine Vorrichtung der eingangs beschriebenen Art gelöst,

-   die nur durch je eine Verbindung Gehäuse-Aktor und Aktor-Kolben statisch bestimmt ist, indem sie keine Verbindung zu einer größeren Masse, insbesondere keine Verbindung zu einem Fundament aufweist,
-   in der der Aktor als piezoelektrischer Aktor ausgebildet ist und
-   der Kolben in dem Zylinder gegenüber der Umgebungsatmosphäre durch eine Dichtung abgedichtet und in der Dichtung beweglich angeordnet ist.

Dadurch entfällt im Gegensatz zum Stand der Technik, wie er insbesondere in Fig. 4 dargestellt ist, eine Verbindung zu einem Fundament und es entsteht ein freier Zweimassenschwinger. Die Massen des freien Zweimassenschwingers sind über die beiden Elemente Fluid und Aktor miteinander verbunden. Die Steifigkeiten und die Dämpfung der Elemente Fluid und Aktor addieren sich. An beiden Massen wird eine gewollte Bewegung zugelassen. Aufgrund der fehlenden Fundamentierung ist diese Bewegung definiert und einfach messbar. Die Position von Kolben und Gehäuse wird ausschließlich über den Aktor oder das Gehäuse des Aktors statisch bestimmt, im Gegensatz zum Stand der Technik, in dem zur Dichtung eine Metallmembran verwendet wird. Durch diese ist das System statisch überbestimmt, d.h. die Position der Massen Gehäuse und Kolben zueinander wird nicht durch eine Verbindung (Gehäuse des Aktors) sondern über zwei Verbindungen (Gehäuse des Piezoaktors + Metallmembran) definiert.

Vorteil der Verwendung einer Dichtung, insbesondere einer Elastomerdichtung ist, dass geringere Stellkräfte nötig sind, um das Öl zu komprimierten. Deshalb kann der Piezoaktor geringer dimensioniert werden, das System ist generell kompakter und somit die Schwingungen wiederum definierter.

Zur Aufnahme des ersten Drucksensors kann das Gehäuse mit einer Öffnung zwischen Gehäuseaußenseite und Zylinder versehen sein. Dabei kann die Öffnung als Einschrauböffnung ausgebildet sein.

In einer weiteren Ausgestaltung der Erfindung ist vorgesehen, dass bei einem Einsatz zu einer Primärkalibrierung ein eine Bewegung des Kolbens relativ zum Gehäuse erfassendes Messsystem angeordnet ist. Da es sich um einen freien Zweimassenschwinger handelt, muss diese Relativbewegung, vorteilhafter Weise durch eine Ermittlung der Bewegung des Kolbens und des Gehäuses erfasst werden. Die Bewegungen werden zweckmäßigerweise direkt an der Stelle des Kolbens und des Gehäuses gemessen, welche direkt an das Fluid grenzen.

Es ist dabei vorteilhaft, wenn das Messsystem sowohl dynamische als auch statische Bewegungen erfassend ausgebildet ist. Da für die Berechnung sowohl des Drucks als auch des Volumens statische und dynamische Kolbenbewegungen zu messen sind, können durch eine derartige Ausgestaltung mehrere Messsysteme entfallen.

Gemäß einer weiteren Ausgestaltung kann das Messsystem als kalibrierter Schwingungssensor oder als Laservibrometer mit Geschwindigkeits- und Wegdecoder ausgebildet sein.

Hierbei kann der Aktor als Hohlaktor mit einer Strahldurchführung ausgebildet sein, durch die das Laservibrometer auf den Kolben gerichtet ist.

Da mit der Erfindung ein dynamisch primärkalibrierter Drucksensor zur Verfügung gestellt werden kann, kann dieser dann auch eine exakte Sekundärkalibrierung vornehmen. Hierzu ist vorgesehen, dass bei einem Einsatz bei einer Sekundärkalibrierung der Zylinder zur Aufnahme eines Fluids, mit einem sekundär zu kalibrierenden zweiten Drucksensor verbindbar ist. Bei einer Sekundärkalibrierung mit einem primärkalibrierten Drucksensor als Referenzsensor kann e der Aufwand erheblich reduziert werden.

Dabei kann das Gehäuse mit einer zweiten Öffnung zwischen Gehäuseaußenseite und Zylinder zur Aufnahme des zweiten Drucksensors versehen sein. Diese zweite Öffnung kann ebenfalls wieder als Einschrauböffnung ausgebildet sein.

Für die Durchführung des erfindungsgemäßen Verfahrens kann eine einen statischen Vordruck in dem Zylinder erzeugende Linearspindel angeordnet sein.

Alternativ zu der Linearspindel kann auch ein zweiter Zylinder vorgesehen sein, in dem ein gegenüber der Umgebungsatmosphäre abgedichteter und in dem zweiten Zylinder beweglicher Verstellkolben angeordnet ist.

Die erfindungsgemäße Aufgabe wird auch durch ein Verfahren zur dynamischen Kalibrierung von Drucksensoren wie eingangs vorgestellt, gelöst, bei dem die dem Istwert entsprechende Druckänderung $\Delta p$ mittels des Kompressionswertes K für das Fluid, der wirksamen Druckfläche $A_K$, des mit Fluid gefüllten Volumens $V_0$ des Zylinders, der Kolbenverschiebung $\Delta x_K$ sowie der Verschiebung des Zylinders $\Delta x_Z$ errechnet wird mit

$$\Delta p = K \frac{A_K(\Delta x_K - \Delta x_Z)}{V_0} \ .$$

Die Druckänderung kann dann mit dem den Druck repräsentierenden Wert des zu kalibrierenden Drucksensors, der mit dem Druck und damit mit der Druckänderung beaufschlagt wird verglichen werden. Aus diesem Vergleich kann dann ein Kalibrierwert ermittelt werden. Der Drucksensor wird somit direkt mit dem zu detektierenden Wert, d.h. primär, kalibriert und nicht über einen Vergleich.

Der Druck $p_n$ kann für verschiedene Kolbenverschiebungen $x_{K(1)} \ldots x_{K(n)}$ und Zylinderverschiebungen $x_{Z(1)} \ldots x_{Z(n)}$ errechnet wird mit

$$(p_n - p_{n-1}) = K \cdot \frac{A_K \cdot ((x_{K(n)} - x_{K(n-1)}) + (x_{Z(n)} - x_{Z(n-1)}))}{V_0}, \ n \in \mathbb{N}.$$

Damit wird es mit dem erfindungsgemäßen Verfahren möglich, eine Kalibrierung mit verschiedenen statischen Drücken auszuführen.

Die Kolbenverschiebung $\Delta x_K$ und die Zylinderverschiebung $\Delta x_Z$ können auch dynamisch, d.h. als Funktionen der Zeit $\dot{x}_K = dx_K/dt$ und $\dot{x}_K = dx_Z/dt$ erzeugt werden. Die dynamische Druckfunktion $\dot{p} = dp/dt$ wird dann mit

$$\dot{p} = K \cdot \frac{A_K(\dot{x}_K + \dot{x}_Z)}{V_0}$$

errechnet.

In einer Variante der Erzeugung einer dynamischen Druckfunktion können $\dot{x}_K$ und $\dot{x}_Z$ als Sinusfunktion mit einer Frequenz f erzeugt werden.

Hierbei ist es auch möglich, dass $\dot{x}_K$ und $\dot{x}_Z$ mit einer variierenden Frequenz, d.h. $\dot{x}_K(f)$ und $\dot{x}_Z(f)$, und der Kalibrierwert $c$ über eine Berechnung eines frequenzabhängigen Druckes $\dot{p}(f)$ als Funktion $c(f)$ erzeugt werden. Damit wird es möglich, einen vollständigen Frequenzgang des Sensors zu bestimmen.

In einer ersten Verfahrensvariante ist vorgesehen, dass dem Druck in dem Zylinder, ein dynamischer Druck, welcher mit dem Aktor erzeugt wird, überlagert wird. Wenn $\dot{x}_K$ und $\dot{x}_Z$ als Sinusfunktion mit einer Frequenz f erzeugt werden, wird in dem Zylinder ein statischer Vordruck erzeugt, der über dem Umgebungsdruck liegt, dem dann der dynamische Druck überlagert wird.

Die für die Druckberechnung mit

$$\dot{p} = K \cdot \frac{A_K(\dot{x}_K + \dot{x}_Z)}{V_0}$$

erforderlichen Werte der Kolbenfläche $A_K$, Volumen $V_0$, Kompressionsmodul K und der zeitabhängigen Kolbenbewegung $\dot{x}_K$ und Zylinderbewegung $\dot{x}_Z$ werden wie folgt ermittelt:

a) Eine Berechnung der Fläche $A_K$ erfolgt über eine Durchmessermessung des Kolbens.

b) Das Kompressionsmodul K wird anhand des eingesetzten Fluids, anhand dokumentierter Tabellenwerte festgelegt.

Die zeitabhängige Kolbenbewegung $\dot{x}_K$ und die Zylinderbewegung $\dot{x}_Z$ werden ermittelt. Das kann durch eine separate Messung ihrer Beschleunigungen $\ddot{x}_K$ und $\ddot{x}_Z$ und dann über die Gleichung

$$\dot{x}_K = \int \ddot{x}_K \ \text{ und } \ \dot{x}_Z = \int \ddot{x}_Z$$

geschehen.

c) Die Ermittlung des Volumens $V_0$, erfolgt unter Verwendung eines nicht notwendigerweise dynamisch kalibrierten Drucksensors. Das Volumen $V_O$ ist mit einem flüssigen Fluid, vorzugsweise mit Öl gefüllt. Damit werden zwei Messungen des dynamischen Drucksensorausgangssignals U im Zylinder durchgeführt. Zwischen diesen Messungen wird das Ausgangsvolumen variiert, der statische Vordruck, repräsentiert durch das statische Ausgangssignal U am Drucksensor, jedoch gleich eingestellt, d.h. auf den gleichen Wert, wie vor der Veränderung des Ausgangsvolumens. Die Schritte können noch detaillierter erläutert werden: Zunächst wird eine erste Messung ausgeführt, wobei die Kolben- und Zylinderbewegung $\dot{x}_{K1}$ bzw. $\dot{x}_{Z1}$ gemessenen und ein dynamische Ausgangsparameter $\dot{U}_1$ bei einer Frequenz $f_1$ am Drucksensor ermittelt wird. Dann wird das Volumen des Zylinders um $\Delta V$ verändert. Anschließend erfolgt eine zweite Messung des dynamischen Ausgangsparameters $\dot{U}_2$ bei der gleichen Frequenz $f_2 = f_1$, wobei die Kolben- und Zylinderbewegung $\dot{x}_{K2}$ bzw. $\dot{x}_{Z2}$ gemessen werden, welche nötig sind, um denselben dynamischen Ausgangsparameter, d.h. $\dot{U}_1 = \dot{U}_2$ am Drucksensor zu erhalten. Dann kann das Volumen $V_0$ berechnet werden mit

$$V_0 = \frac{\Delta V}{\frac{(\dot{x}_{K2}+\dot{x}_{Z2})}{(\dot{x}_{K1}+\dot{x}_{Z1})}-1} \ .$$

In einer zweiten Verfahrensvariante ist vorgesehen, dass die für die Druckberechnung mit

$$\dot{p} = K \cdot \frac{A_K(\dot{x}_K + \dot{x}_Z)}{V_0}$$

erforderlichen Werte der Kolbenfläche $A_K$, Volumen $V_0$, Kompressionsmodul K und der zeitabhängigen Kolbenbewegung $\dot{x}_K$ und Zylinderbewegung $\dot{x}_Z$ werden wie folgt ermittelt:

a) Eine Berechnung der Fläche $A_K$ erfolgt über eine Durchmessermessung des Kolbens.

b) Das Kompressionsmodul K wird anhand des eingesetzten Fluids, anhand dokumentierter Tabellenwerte festgelegt.

d) Die zeitabhängige Kolbenbewegung $\dot{x}_K$ und die Zylinderbewegung $\dot{x}_Z$ werden ermittelt. Das kann durch eine separate Messung ihrer Beschleunigungen $\ddot{x}_K$ und $\ddot{x}_Z$ und dann über die Gleichung:

$$\dot{x}_K = \int \ddot{x}_K \ \text{ und } \ \dot{x}_Z = \int \ddot{x}_Z$$

geschehen.

c) Eine Ermittlung des Volumens $V_0$, erfolgt unter Verwendung eines nicht notwendigerweise dynamisch, jedoch notwendigerweise statisch, kalibrierten Drucksensors. Zum Zwecke der Ermittlung des Volumens $V_0$ wird das flüssige

Fluid durch ein gasförmiges Fluid ersetzt. Damit werden zwei Messungen des statischen Drucks $p_1$ und $p_2$ im Zylinder durchgeführt, zwischen denen das Ausgangsvolumen um $\Delta V$ variiert wird. Dabei wird zunächst eine erste Messung ausgeführt, woraus der statische Ausgangsparameter $U_1$ am Drucksensor ermittelt wird. Dann wird das Volumen des Zylinders um $\Delta V$ verändert und es erfolgt anschließend eine zweite Messung des statischen Ausgangsparamters $U_2$. Dann wird das Volumen $V_0$ berechnet mit

$$V_0 = \frac{\Delta V}{\frac{p_2}{p_1}-1} \quad .$$

Eine Gestaltung des Verfahrens sieht vor, dass mittels eines separaten Verstellkolbens mit einer Kolbenfläche $A_{VK}$ der eine Verstellbewegung mit einem Verstellweg $dx_{VK}$ ausführt, das Volumen $V_0$ variiert und berechnet wird mit

$$V_0 = \frac{A_{VK} \cdot \Delta x_{VK}}{\frac{p_2}{p_1}-1} \quad .$$

In einer dritten Verfahrensvariante kann die aufwändige Ermittlung des Volumens $V_0$, wie sie in der ersten und zweiten Verfahrensvariante erforderlich ist, entfallen. Hierbei werden die zeitabhängige Kolbenbewegung $\dot{x}_K$ und die Zylinderbewegung $\dot{x}_Z$ erzeugt und mittels eines Messsystems erfasst. Die dynamische Druckfunktion $\dot{p}$ wird errechnet mit

$$\dot{p} = K \cdot \frac{A_K(\dot{x}_K + \dot{x}_Z)}{V_0} = C_1 \cdot (\dot{x}_K + \dot{x}_Z) \quad ,$$

wobei alle konstanten Größen in $C_1$, zusammengefasst werden, d.h.

$$C_1 = K \cdot \frac{A_K}{V_0} \quad .$$

Ohne eine separate Ermittlung der Einzelgrößen wird $C_1$ nun insgesamt ermittelt. Dies geschieht durch zwei statische Messungen des Drucks, eines notwendigerweise statisch kalibrierten Drucksensors in Relation zur jeweiligen Kolbenverschiebung $\Delta x_K$ und Zylinderverschiebung $\Delta x_Z$, die ebenfalls gemessen werden. Daraus werden die Druckdifferenz $\Delta p$, die Kolbenverschiebung $\Delta x_K$ und Zylinderverschiebung $\Delta x_Z$ ermittelt und $C_1$ wird berechnet mit

$$C_1 = \frac{\Delta p}{\Delta x_K + \Delta x_Z} \quad .$$

Die Kolbenverschiebung $\Delta x_K$ und die Zylinderverschiebung $\Delta x_Z$ können auch mit $\Delta x_K \gg \Delta x_Z$ gewählt werden, wobei der Unterschied mindestens eine Größenordnung beträgt. Die zeitabhängige Druckfunktion $\dot{p}$ wird dann unter der Verwendung der Gleichungen

$$\dot{p} = K \cdot \frac{A_K \cdot \dot{x}_K}{V_0} = C_1 \cdot (\dot{x}_K)$$

bestimmt, wobei $C_1$ durch zwei statische Messungen des Drucks, eines notwendigerweise statisch kalibrierten Drucksensors in Relation zur jeweiligen Kolbenverschiebung $\Delta x_K$ ermittelt und daraus die Druckdifferenz $\Delta p$ und $C_1$ berechnet wird mit

$$C_1 = \frac{\Delta p}{\Delta x_K} \quad .$$

Die Erfindung ermöglicht es, einen Drucksensor dynamisch primär zu kalibrieren. Damit sieht die erfindungsgemäße Lösung auch vor, dass ein solcher primär kalibrierter Sensor mit einem nunmehr bekannten Kalibrierwert c als erster Drucksensor für eine Sekundärkalibrierung eines zweiten Drucksensors verwendet wird. Damit wird der vorrichtungs- und verfahrensseitige Aufwand erheblich verringert.

Die Erfindung soll nachfolgend anhand von Ausführungsbeispielen näher erläutert werden. In den zugehörigen Zeichnungen zeigt

Fig. 1  einen Frequenzgang eines Schwingungssensors mit einer Abweichung bezogen auf eine Empfindlichkeit bei 160 Hz,

Fig. 2  eine Darstellung des Funktionsprinzips einer Sekundärkalibrierung,

Fig. 3  einen piezolektrisch betriebenen Druckgenerator nach dem Stand der Technik,

Fig. 4  ein mechanisches Ersatzschaltbild eines Druckgenerators nach dem Stand der Technik,

Fig. 5  eine schematische Darstellung der Auswirkung einer Fundamentverbindung nach dem Stand der Technik,

Fig. 6  eine schematische Darstellung des Funktionsprinzips der erfindungsgemäßen Lösung,

Fig. 7  einen Aufbau einer erfindungsgemäßen Kalibriervorrichtung gemäß einem ersten Ausführungsbeispiel,

Fig. 8  einen Druck-Zeit-Verlauf einer dynamischen Druckbeaufschlagung eines zu kalibrierenden Drucksensors,

Fig. 9  einen Aufbau einer erfindungsgemäßen Kalibriervorrichtung gemäß einem zweiten Ausführungsbeispiel und

Fig. 10  einen Aufbau einer erfindungsgemäßen Kalibriervorrichtung gemäß einem dritten Ausführungsbeispiel.

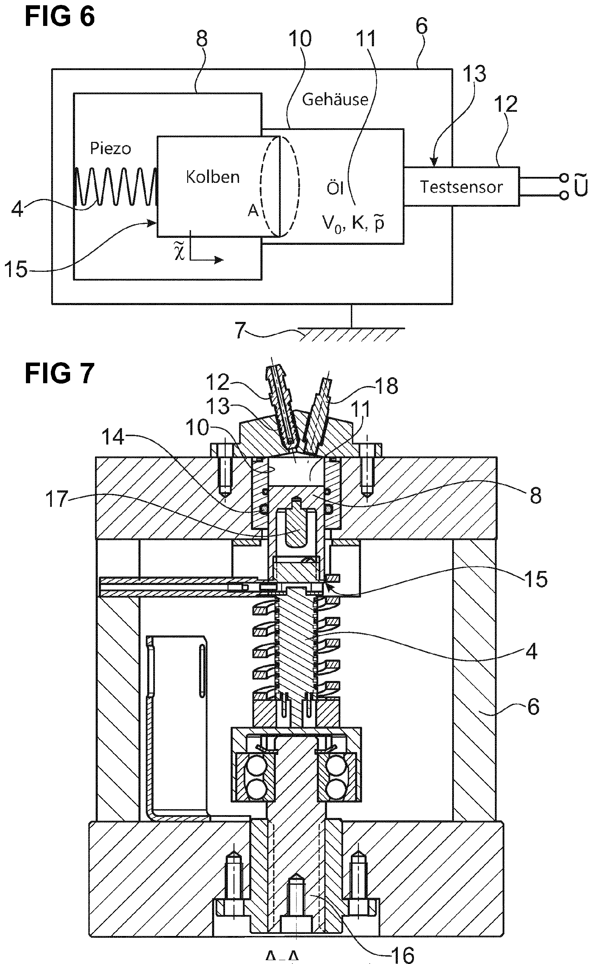

Fig. 6 zeigt eine Prizipdarstellung einer erfindungsgemäßen Lösung. Die Vorrichtung weist ein Gehäuse 6 und ein mit dem Gehäuse verbundenen Zylinder 10 zur Aufnahme eines Fluids, insbesondere Öl, wie Hydrauliköl, auf. Der Zylinder 10 ist mit einem ersten Drucksensor 12 verbindbar. Der erste Drucksensor 12 kann über eine erste Öffnung 13, insbesondere eine Schrauböffnung, mit dem Zylinder 10 verbunden werden und steht damit mit dem Fluid 11 in Kontakt. Der erste Drucksensor 12 ist der Sensor, der primär kalibriert werden soll.

Weiterhin ist ein Kolben 8 vorgesehen, der mit dem Zylinder 10 derart zusammenwirkt, dass er in dem Zylinder gegenüber der Umgebungsatmosphäre durch eine Dichtung 14 abgedichtet und in der Dichtung 14 beweglich angeordnet ist. Damit kann der Kolben 8 direkt auf das Fluid 11 drücken und in dem Zylinder 10 einen Druck einstellen. Angetrieben wird der Kolben 8 durch einen piezoelektrischen Aktor 4, der zwischen Gehäuse 6 und einer vom Zylinder 10 abgewandten Seite 15 des Kolbens 8 angeordnet ist.

Die Vorrichtung weist keine Verbindung zu einer größeren Masse, insbesondere zu keinem Fundament auf. Damit ist sie nur durch die Verbindung Gehäuse 6 zu Aktor 4 und Aktor 4 zu Kolben 8 statisch bestimmt.

Der eingesetzte Aktor 4 wandelt ein Eingangssignal in Form einer nicht näher dargestellten in eine mechanische Verformung um, die als mechanische Bewegung auf den Kolben 8 übertragen wird.

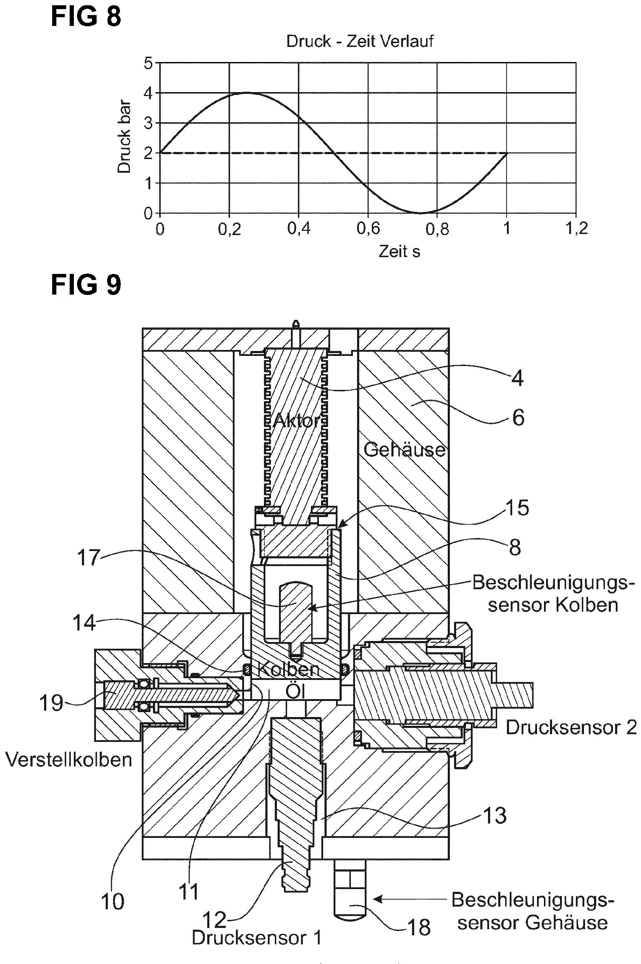

Der Aufbau einer erfindungsgemäßen Vorrichtung, wie er in Fig. 7 dargestellt ist, weist alle Elemente, wie sie in der Prinzipdarstellung gemäß Fig. 6 gezeigt sind, auf. Gleiche Bezugszeichen weisen auf die gleichen Elemente, wie Gehäuse 6, Kolben 8, Zylinder 10, Fluid 11, erster Drucksensor 12, erste Öffnung 13, Dichtung 14 und zylinderabgewandte Seite 15 des Kolbens 8 hin. Zusätzlich ist eine auf den Aktor wirkende Linearspindel 16 vorgesehen, die einen Vordruck in dem Zylinder 10 einstellen lässt. Diesem wird dann der dynamische Druck, der mit dem Aktor 4 erzeugt wird, überlagert. Es kann damit das in Fig. 8 dargestellte Druckprofil erzeugt werden.

Aufgrund verschiedener Einflüsse ist es wünschenswert, dass das Ölvolumen sehr klein ist, um die Genauigkeit des Aufbaus zu erhöhen. Dies bedeutet jedoch im Umkehrschluss, dass bereits bei einem sehr kleinen Kolbenweg ($\approx$ 0,1 $\mu$m) ausreichend hohe Drücke erzeugt werden. Diesen Weg mit ausreichender Genauigkeit zu messen, stellt eine große Herausforderung dar. Die Erfindung sieht deshalb vor, Schwingungssensoren 17, 18 zu benutzen. Diese können sehr genau kalibriert werden. Über gemessene Beschleunigungen können dann die gesuchten Wege berechnet werden.

Ein eine Bewegung des Kolbens relativ zum Gehäuse erfassendes Messsystem besteht daher aus einem ersten Schwingungssensor 17, der mit dem Kolben verbunden ist, und einem zweiten Schwingungssensor 18, der mit dem Gehäuse verbunden ist. Die Bestimmung des Kolbenwegs erfolgt dann mittels der von den Schwingungssensoren 17, 18 ausgegebenen Ausgangssignale. gemäß dem erfindungsgemäßen Verfahren . Die Bestimmung der zeitabhängigen Kolbenbewegung $x_K$ wird mittels des beschleunigungsäquivalenten Ausgangssignals des ersten Schwingungssensors 17 und die Zylinderbewegung $x_Z$ mittels des beschleunigungsäquivalenten Ausgangssignals des zweiten Schwingungssensors 18 ermittelt. Das erfolgt durch eine separate Messung ihrer Beschleunigungen $\ddot{x}_K$ und $\ddot{x}_Z$ und dann über die Gleichung:

$$\dot{x}_K = \int \ddot{x}_K \quad \text{und} \quad \dot{x}_Z = \int \ddot{x}_Z$$

Je nach Empfindlichkeit des Sensors ist die Messung des Wegs erst ab ausreichend hohen Frequenzen möglich. Aufgrund der Bauraumbeschränkungen im Kolben kann nur ein sehr kleiner Sensor verwendet werden.

Die Druckberechnung zur Kalibrierung des ersten Drucksensors 12 erfolgt bei diesem Ausführungsbeispiel wie unter "erste Verfahrensvariante" beschrieben.

Ist der erste Drucksensor 12 primär dynamisch kalibriert, kann er als Referenzsensor für einen zweiten Drucksensor 20 für eine Sekundärkalibrierung verwendet werden.

Der Aufbau einer erfindungsgemäßen Vorrichtung, wie er in Fig. 9 dargestellt ist, weist alle Elemente, wie sie in der Prinzipdarstellung gemäß Fig. 6 gezeigt sind, auf. Gleiche Bezugszeichen weisen auf die gleichen Elemente, wie Gehäuse 6, Kolben 8, Zylinder 10, Fluid 11, erster Drucksensor 12, erste Öffnung 13, Dichtung 14 und zylinderabgewandte Seite 15 des Kolbens 8 hin. Zusätzlich ist ein auf Zylinder 10 wirkenden Verstellkolben 19 vorgesehen, der einen Vordruck in dem Zylinder 10 einstellen lässt. Diesem wird dann der dynamische Druck, der mit dem Aktor 4 erzeugt wird, überlagert. Es kann damit das in Fig. 8 dargestellte Druckprofil erzeugt werden.

Die Bestimmung der zeitabhängigen Kolbenbewegung $\dot{x}_K$ wird auch in diesem Ausführungsbeispiel mittels des beschleunigungsäquivalenten Ausgangssignals des ersten Schwingungssensors 17 und die Zylinderbewegung $\dot{x}_Z$ mittels des beschleunigungsäquivalenten Ausgangssignals des zweiten Schwingungssensors 18 ermittelt. Das erfolgt durch eine separate Messung ihrer Beschleunigungen $\ddot{x}_K$ und $\ddot{x}_Z$ und dann über die Gleichung:

$$\dot{x}_K = \int \ddot{x}_K \quad \text{und} \quad \dot{x}_Z = \int \ddot{x}_Z$$

An dieser Stelle sei erwähnt, dass die Zylinderbewegung mitunter sehr viel kleiner und für eine gegebenenfalls hinreichende Genauigkeit vernachlässigbar kleiner als die Kolbenbewegung sein kann. In diesem Fall kann auf die Ermittlung der Zylinderbewegung $\dot{x}_Z$ verzichtet werden. In diesem Falle kann auch der zweite Beschleunigungssensor 17 entfallen.

Die Druckberechnung zur Kalibrierung des ersten Drucksensors 12 erfolgt bei dem Ausführungsbeispiel gemäß Fig. 9 wie unter "zweite Verfahrensvariante" beschrieben.

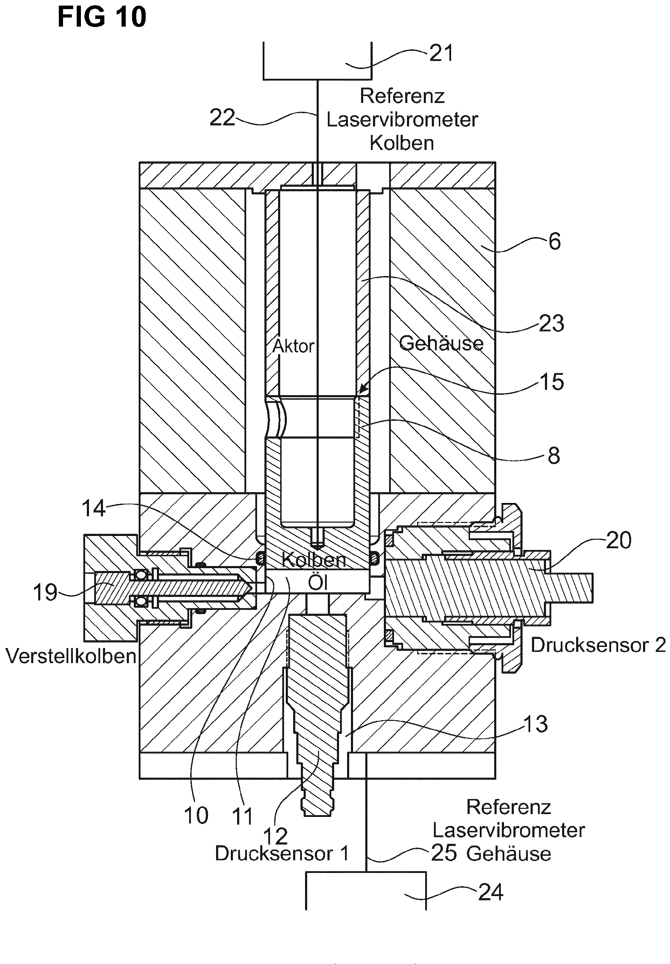

Der Aufbau einer erfindungsgemäßen Vorrichtung, wie er in Fig. 10 dargestellt ist, weist alle Elemente, wie sie in der Prinzipdarstellung gemäß Fig. 6 gezeigt sind, auf. Gleiche Bezugszeichen weisen auf die gleichen Elemente, wie Gehäuse 6, Kolben 8, Zylinder 10, Fluid 11, erster Drucksensor 12, erste Öffnung 13, Dichtung 14 und zylinderabgewandte Seite 15 des Kolbens 8 hin. Zusätzlich ist ein auf Zylinder 10 wirkenden Verstellkolben 19 vorgesehen, der einen Vordruck in dem Zylinder 10 einstellen lässt. Diesem wird dann der dynamische Druck, der mit dem Aktor 4 erzeugt wird, überlagert. Es kann damit das in Fig. 8 dargestellte Druckprofil erzeugt werden.

Das Ziel des Ausführungsbeispieles gemäß Fig. 10 ist es, den Frequenzbereich, der bisher durch die in den Ausführungsbeispielen nach Fig. 7 und Fig. 9 eingesetzten Schwingungssensoren 17 und 18 begrenzt ist, zu erweitern. Insbesondere soll, der Frequenzbereich zu kleinen Frequenzen bis $f = 0$ Hz erweitert werden. Da es Kalibriermethoden für die statische Kalibrierung von Drucksensoren gibt, ist mit der Erweiterung des Frequenzbereichs zu $f = 0$ Hz ein Anschluss des dynamischen Verfahrens an das statische und somit auch ein Vergleich der ermittelten Werte möglich.

Um dies zu erreichen wurden in der dem Ausführungsbeispiel gemäß Fig. 10 die Schwingungssensoren 17 und 18 in den Figuren 7 und 9 durch ein Laservibrometer 21 und ein zweites Laservibrometer 24 ersetzt. Diese sind in der Lage, sehr viel kleinere Beschleunigungen zu messen, als der zuvor gezeigten Beschleunigungssensoren 16 und 17.

Um den Laserstrahl 22 des Laservibrometers 21 direkt auf den Kolben treffen zu lassen, ist der Aktor als Hohlaktor 23 ausgebildet. Der Laserstrahl 25 des zweiten Laservibrometers 24 trifft direkt auf das Gehäuse 6.

Weiterhin ist das Laservibrometer 21 in der Lage, auch statische Messungen der Kolbenverschiebung mit einer sehr hohen Genauigkeit durchzuführen. Dies ist ein wesentlicher Vorteil zu den zuvor gezeigten Ausführungsbeispielen. Das gleiche gilt für das zweite Laservibrometer 24.

Die Druckberechnung zur Kalibrierung des ersten Drucksensors 12 erfolgt bei dem Ausführungsbeispiel gemäß Fig. 10 wie unter "dritte Verfahrensvariante" beschrieben.

Auch hier ist es möglich, bei Vorliegen der dynamischen Primärkalibrierung des ersten Drucksensors 12 einen zweiten Drucksensor 20 dynamisch sekundär zu kalibrieren. Bei einer solchen Sekundärkalibrierung können dann die Laservibrometer 21 und 24 entfallen.

Die Besonderheiten der Erfindung können folgendermaßen zusammengefasst werden:

- Es wird ein Pistonphon (Kolben - Zylinder System) benutzt

- Es wird ein freies Zweimassen-Schwinger-System realisiert.
- Eine Bewegung an Kolben 8 und Gehäuse 6 wird ermöglicht.
- An zwei Messpunkten wird die Verschiebung des Kolbens 8 und des Gehäuses 6 gemessen.
- Es handelt sich um ein statisch bestimmtes System, da Kolben 8 und Gehäuse 6 nur über das Gehäuse 6 bzw. den Aktor 4 selbst verbunden sind. Hierzu wird eine Dichtung 14, insbesondere eine Elastomerdichtung verwendet.
- Es wird ein Verstellkolben 19 vorgesehen, mit diesem ist es möglich, eine statische Druckerhöhung zu erzeugen. Die statische Druckerhöhung ist zwingend erforderlich um:

  ▪ Druckamplituden größer 1 bar zu erzeugen und
  ▪ definierte Kalibrierbedingungen im Aufbau herzustellen (insbesondere einen definierten Kompressionsmodul K zu erreichen)

**Bezugszeichenliste**

| | |
|---|---|
| 1 | Balken |
| 2 | Kontrollvolumen |
| 3 | Membran |
| 4 | Aktor |
| 5 | Vergleichssensor |
| 6 | Gehäuse |
| 7 | Fundament |
| 8 | Kolben |
| 9 | Traverse |
| 10 | Zylinder |
| 11 | Fluid |
| 12 | erster Drucksensor |
| 13 | erste Öffnung |
| 14 | Dichtung |
| 15 | zylinderabgewandte Seite des Kolbens |
| 16 | Linearspindel |
| 17 | erster Schwingungssensor |
| 18 | zweiter Schwingungssensor |
| 19 | Verstellkolben |
| 20 | zweiter Drucksensor |
| 21 | Laservibrometer |
| 22 | Laserstrahl |
| 23 | Hohlaktor |
| 24 | zweites Laservibrometer |
| 25 | Laserstrahl des zweiten Laservibrometers |

**Patentansprüche**

1. Vorrichtung zur dynamischen Kalibrierung von Drucksensoren mit einem Gehäuse (6), einem mit dem Gehäuse (6) verbundenen Zylinder (10) zur Aufnahme eines Fluids (11), der über eine erste Öffnung (13) mit einem ersten Drucksensor (12), der damit mit dem Fluid (11) in Kontakt steht, verbindbar ist, einem Aktor (4) und einem mit dem Zylinder (10) zusammenwirkenden Kolben(8), wobei der Aktor (4) zwischen Gehäuse (6) und einer vom Zylinder (10) abgewandten Seite (15) des Kolbens (8) angeordnet ist, **dadurch gekennzeichnet,**

   - **dass** die Vorrichtung nur durch je eine Verbindung Gehäuse (6) -Aktor (4) und Aktor (4) - Kolben (8) statisch bestimmt ist, indem sie keine Verbindung zu einer größeren Masse, insbesondere keine Verbindung zu einem Fundament aufweist,
   - **dass** der Aktor als piezoelektrischer Aktor (4) ausgebildet ist und
   - **dass** der Kolben (8) in dem Zylinder (10) gegenüber der Umgebungsatmosphäre durch eine Dichtung (14) abgedichtet und in der Dichtung (14) beweglich angeordnet ist.

2. Vorrichtung nach Anspruch 1, **dadurch gekennzeichnet, dass** bei einem Einsatz zu einer Primärkalibrierung ein eine Bewegung des Kolbens (8) relativ zum Gehäuse (6) erfassendes Messsystem angeordnet ist.

3. Vorrichtung nach Anspruch 2, **dadurch gekennzeichnet, dass** das Messsystem sowohl dynamische als auch statische Bewegungen erfassend ausgebildet ist.

4. Vorrichtung nach Anspruch 2 oder 3, **dadurch gekennzeichnet, dass** das Messsystem als kalibrierter Schwingungssensor (16; 17) oder als Laservibrometer (21, 24) mit Geschwindigkeits- und Wegdecoder ausgebildet ist.

5. Vorrichtung nach Anspruch 4, **dadurch gekennzeichnet, dass** der Aktor (4) als Hohlaktor (23) mit einer Strahldurchführung ausgebildet durch die das Laservibrometer (21) auf den Kolben gerichtet ist.

6. Vorrichtung nach Anspruch 1, **dadurch gekennzeichnet, dass** bei einem Einsatz zu einer Sekundärkalibrierung der Zylinder (10) zur Aufnahme eines Fluids, mit einem sekundär zu kalibrierenden zweiten Drucksensor (20) verbindbar ist.

7. Vorrichtung nach einem der Ansprüche 1 bis 4, **dadurch gekennzeichnet, dass** eine einen statischen Vordruck in dem Zylinder (10) erzeugende Linearspindel (16) angeordnet ist.

8. Vorrichtung nach einem der Ansprüche 1 bis 4, **dadurch gekennzeichnet, dass** ein zweiter Zylinder vorgesehen ist, in dem ein gegenüber der Umgebungsatmosphäre abgedichteter und in dem zweiten Zylinder beweglicher Verstellkolben (19) angeordnet ist.

9. Verfahren zur dynamischen Kalibrierung von Drucksensoren gemäß der Vorrichtung nach Anspruch 1, bei dem ein den auf einen Drucksensor (12) einwirkenden Druck repräsentierender Istparameter gemessen und mit einem entsprechenden Sollparameter verglichen wird und aus dem Vergleich ein Kalibrierwert c für den Istparameter ermittelt wird, wobei der Druck mittels eines mit einem Zylinder (10), der mit einem Fluid (11) gefüllt ist und über eine erste Öffnung (13) mit dem Drucksensor (12) in Kontakt steht, einem Aktor (4) und einem mit dem Zylinder (10) zusammenwirkenden Kolbens (8) erzeugt wird, **dadurch gekennzeichnet, dass** die dem Istwert entsprechende Druckänderung $\Delta p$ mittels des Kompressionswertes K für das Fluid, der wirksamen Druckfläche $A_K$, des mit Fluid (11) gefüllten Volumens $V_0$ des Zylinders (10), der Kolbenverschiebung $\Delta x_K$ sowie der Verschiebung des Zylinders $\Delta x_Z$ errechnet wird mit

$$\Delta p = K \frac{A_K(\Delta x_K - \Delta x_Z)}{V_0} \ .$$

10. Verfahren nach Anspruch 9, **dadurch gekennzeichnet, dass** der Druck $p_n$ für verschiedene Kolbenverschiebungen $x_{K(1)} \ldots x_{K(n)}$ und Zylinderverschiebungen $x_{Z(1)} \ldots x_{Z(n)}$ errechnet wird mit

$$(p_n - p_{n-1}) = K \cdot \frac{A_K \cdot ((x_{K(n)} - x_{K(n-1)}) + (x_{Z(n)} - x_{Z(n-1)}))}{V_0}, \ n \in \mathbb{N} .$$

11. Verfahren nach Anspruch 9 oder 10, **dadurch gekennzeichnet, dass** die Kolbenverschiebung $\Delta x_K$ und die Zylinderverschiebung $\Delta x_Z$ dynamisch, d.h. als Funktionen der Zeit $\dot{x}_K = dx_K/dt$ und $\dot{x}_Z = dx_Z/dt$ erzeugt werden und die dynamische Druckfunktion $\dot{p} = dp/dt$ errechnet wird mit

$$\dot{p} = K \cdot \frac{A_K(\dot{x}_K + \dot{x}_Z)}{V_0} \ .$$

12. Verfahren nach Anspruch 11, **dadurch gekennzeichnet, dass** $\dot{x}_K$ und $\dot{x}_Z$ als Sinusfunktion mit einer Frequenz f erzeugt wird.

13. Verfahren nach Anspruch 12, **dadurch gekennzeichnet, dass** $\dot{x}_K$ und $\dot{x}_Z$ mit einer variierenden Frequenz, d.h. $\dot{x}_K(f)$ und $\dot{x}_Z(f)$, und der Kalibrierwert über eine Berechnung eines frequenzabhängigen Druckes $\dot{p}(f)$ als Funktion $c(f)$ erzeugt werden.

14. Verfahren nach einem der Ansprüche 9 bis 13, **dadurch gekennzeichnet,**

   • **dass** dem Druck in dem Zylinder (10) ein dynamischer Druck, welcher mit dem Aktor (4) erzeugt wird, überlagert wird,
   • **dass** die Ermittlung der Größen Kolbenfläche A, Volumen $V_0$, Kompressionsmodul K und der zeitabhängigen Kolbenbewegung $\dot{x}_K$ und Zylinderbewegung $\dot{x}_Z$ erfolgt über
   • eine Berechnung der Fläche A über eine Durchmessermessung des Kolbens (8),
   • eine Festlegung des Kompressionsmoduls K anhand des eingesetzten Fluids (11), anhand dokumentierter Tabellenwerte,
   • eine Ermittlung der zeitabhängigen Kolbenbewegung $\dot{x}_K$ und der Zylinderbewegung $\dot{x}_Z$
   • eine Berechnung des Volumens $V_0$, unter Verwendung eines nicht notwendigerweise dynamisch kalibrierten Drucksensors (12, 20), wobei zwei Messungen des dynamischen Drucksensorausgangssignals $\dot{U}$ im Zylinder (10) durchgeführt werden, zwischen denen das Ausgangsvolumen variiert wird, der statische Vordruck, repräsentiert durch das statische Ausgangssignal $U$ am Drucksensor (12; 20), jedoch gleich eingestellt wird, wobei zunächst eine erste Messung ausgeführt wird, wobei die Kolben- und Zylinderbewegung $\dot{x}_{K1}$ bzw. $\dot{x}_{Z1}$ gemessenen und ein dynamischer Ausgangsparameter $\dot{U}_1$ bei einer Frequenz $f_1$ am Drucksensor (12; 20) ermittelt wird, dann wird das Volumen des Zylinders um $\Delta V$ verändert und anschließend erfolgt eine zweite Messung des dynamischen Ausgangsparameters $\dot{U}_2$ bei der gleichen Frequenz $f_2 = f_1$, wobei die Kolben- und Zylinderbewegung $\dot{x}_{K2}$ bzw. $\dot{x}_{Z2}$ gemessen wird, welche nötig ist, um denselben dynamischen Ausgangsparameter, d.h. $\dot{U}_1 = \dot{U}_2$ am Drucksensor zu erhalten, und dann das Volumen V0 berechnet wird mit

$$V_0 = \frac{\Delta V}{\dfrac{(\dot{x}_{K2} + \dot{x}_{Z2})}{(\dot{x}_{K1} + \dot{x}_{Z1})} - 1} \quad .$$

15. Verfahren nach einem der Ansprüche 8 bis 13, **dadurch gekennzeichnet, dass** die Ermittlung der Größen Kolbenfläche A, Volumen $V_0$, Kompressionsmodul K und der der zeitabhängigen Kolbensowie Zylinderbewegung $\dot{x}_K$ und $\dot{x}_Z$ erfolgt über

   • eine Berechnung der Fläche A über eine Durchmessermessung des Kolbens (8),
   • eine Festlegung des Kompressionsmoduls K anhand des eingesetzten fluids, mittels dokumentierter Tabellenwerte,
   • eine Ermittlung der zeitabhängigen Kolbenbewegung $\dot{x}_K$ und der Zylinderbewegung $\dot{x}_Z$,
   • eine Berechnung des Volumens $V_0$, unter Verwendung eines nicht notwendigerweise dynamisch, jedoch notwendigerweise statisch, kalibrierten Drucksensors (12; 20),

   • wobei zum Zwecke der Ermittlung des Volumens $V_0$ das flüssige Fluid durch ein gasförmiges Fluid ersetzt wird,
   • zwei Messungen des statischen Drucks $p_1$ und $p_2$ im Zylinder durchgeführt werden, zwischen denen das Ausgangsvolumen um $\Delta V$ variiert wird, wobei zunächst eine erste Messung ausgeführt woraus der statische Ausgangsparameter $U_1$ am Drucksensor (12; 20) ermittelt wird, dass das Volumen des Zylinders (10) um $\Delta V$ verändert wird und eine zweite Messung des statischen Ausgangsparamters $U_2$ erfolgt, und das Volumen $V_0$ berechnet wird mit

$$V_0 = \frac{\Delta V}{\dfrac{p_2}{p_1} - 1} \quad .$$

**16.** Verfahren nach Anspruch 15, **dadurch gekennzeichnet, dass** mittels eines separaten Verstellkolbens (19) mit einer Kolbenfläche $A_{VK}$ der eine Verstellbewegung mit einem Verstellweges $\Delta x_{VK}$ ausführt, das Volumen $V_0$ variiert und berechnet wird mit

$$V_0 = \frac{A_{VK} \cdot \Delta x_{VK}}{\frac{p_2}{p_1} - 1} \quad .$$

**17.** Verfahren nach einem der Ansprüche 9 bis 13, **dadurch gekennzeichnet, dass** die zeitabhängige Kolbenbewegung $\dot{x}_K$ und die Zylinderbewegung $\dot{x}_Z$ erzeugt und mittels eines Messystems (17, 18) erfasst werden, die dynamische Druckfunktion $\dot{p}$ errechnet wird mit

$$\dot{p} = K \cdot \frac{A_K(\dot{x}_K + \dot{x}_Z)}{V_0} = C_1 \cdot (\dot{x}_K + \dot{x}_Z) \;,$$

wobei $C_1$ durch zwei statische Messungen des Drucks, eines notwendigerweise statisch kalibrierten Drucksensors (12; 20) in Relation zur jeweiligen Kolbenverschiebung $\Delta x_K$ und Zylinderverschiebung $\Delta x_Z$ ermittelt und daraus die Druckdifferenz $\Delta p$ und die Kolbenverschiebung $\Delta x_K$ und Zylinderverschiebung $\Delta x_Z$ ermittelt werden und $C_1$ berechnet wird mit

$$C_1 = \frac{\Delta p}{\Delta x_K + \Delta x_Z}.$$

**18.** Verfahren nach einem der einem der Ansprüche 9 bis 17, **dadurch gekennzeichnet, dass** ein danach primär kalibrierter Sensor (12) mit einem nunmehr bekannten Kalibrierwert c als erster Drucksensor (12) für eine Sekundärkalibrierung eines zweiten Drucksensors (20) verwendet wird.

## Claims

**1.** Device for dynamically calibrating pressure sensors having a housing (6), a cylinder (10), connected to the housing (6), for receiving a fluid (11), which cylinder is able to be connected, via a first opening (13), to a first pressure sensor (12), which is therefore in contact with the fluid (11), an actuator (4) and a piston (8) interacting with the cylinder (10), wherein the actuator (4) is arranged between the housing (6) and a side (15), facing away from the cylinder (10), of the piston (8), **characterized in that**

- the device is statically determined in each case only by a housing (6)-actuator (4) and actuator (4)-piston (8) connection, since it does not have a connection to a larger mass, in particular does not have a connection to a base,
- **in that** the actuator is designed as a piezoelectric actuator (4), and
- **in that** the piston (8) is sealed in the cylinder (10) relative to the surrounding atmosphere by a seal (14) and is arranged so as to be able to move in the seal (14).

**2.** Device according to Claim 1, **characterized in that**, in the case of use for a primary calibration, a measurement system that detects a movement of the piston (8) relative to the housing (6) is arranged.

**3.** Device according to Claim 2, **characterized in that** the measurement system is designed so as to detect both dynamic and static movements.

**4.** Device according to Claim 2 or 3, **characterized in that** the measurement system is designed as a calibrated vibration sensor (16; 17) or as a laser vibrometer (21, 24) having speed and travel decoders.

**5.** Device according to Claim 4, **characterized in that** the actuator (4) is designed as a hollow actuator (23) having a beam passage through which the laser vibrometer (21) is directed at the piston.

6. Device according to Claim 1, **characterized in that**, in the case of use in a secondary calibration, the cylinder (10) for receiving a fluid is able to be connected to a second pressure sensor (20) to be secondary-calibrated.

7. Device according to one of Claims 1 to 4, **characterized in that** a linear spindle (16) generating a static admission pressure in the cylinder (10) is arranged.

8. Device according to one of Claims 1 to 4, **characterized in that** a second cylinder is provided in which there is arranged an adjusting piston (19) that is sealed relative to the surrounding atmosphere and able to move in the second cylinder.

9. Method for dynamically calibrating pressure sensors according to the device according to Claim 1, wherein an actual parameter representing the pressure acting on a pressure sensor (12) is measured and compared with a corresponding setpoint parameter, and a calibration value c for the actual parameter is determined from the comparison, the pressure being generated by way of a piston (8) interacting with a cylinder (10) that is filled with a fluid (11) and is in contact with the pressure sensor (12) via a first opening (13), an actuator (4) and a piston (8) interacting with the cylinder (10), **characterized in that** the pressure change $\Delta p$ corresponding to the actual value is calculated by way of the compression value K for the fluid, the effective pressure surface $A_K$, the volume $V_0$ of the cylinder (10) filled with fluid (11), the piston displacement $\Delta x_K$ and the displacement of the cylinder $\Delta x_Z$ using

$$\Delta p = K \frac{A_K(\Delta x_K - \Delta x_Z)}{V_0} \ .$$

10. Method according to Claim 9, **characterized in that** the pressure $p_n$ for different piston displacements $x_{K(1)} \ldots x_{K(n)}$ and cylinder displacements $x_{Z(1)} \ldots x_{Z(n)}$ is calculated using

$$(p_n - p_{n-1}) = K \cdot \frac{A_K \cdot ((x_{K(n)} - x_{K(n-1)}) + (x_{Z(n)} - x_{Z(n-1)}))}{V_0} \ , \ n \in \mathbb{N} \ .$$

11. Method according to Claim 9 or 10, **characterized in that** the piston displacement $\Delta x_K$ and the cylinder displacement $\Delta x_Z$ are generated dynamically, that is to say as functions of time $\dot{x}_K = dx_K/dt$ and $\dot{x}_Z = dx_Z/dt$ , and the dynamic pressure function $\dot{p} = dp/dt$ is calculated using

$$\dot{p} = K \cdot \frac{A_K(\dot{x}_K + \dot{x}_Z)}{V_0} \ \ .$$

12. Method according to Claim 11, **characterized in that** $\dot{x}_K$ and $\dot{x}_Z$ are generated as a sinusoidal function at a frequency $f$.

13. Method according to Claim 12, **characterized in that** $\dot{x}_K$ and $\dot{x}_Z$ are generated at a varying frequency, that is to say $\dot{x}_K(f)$ and $\dot{x}_Z(f)$, and the calibration value is generated by calculating a frequency-dependent pressure $\dot{p}(f)$ as a function $c(f)$.

14. Method according to one of Claims 9 to 13, **characterized in that**

• the pressure in the cylinder (10) is overlaid with a dynamic pressure that is generated by the actuator (4) ,
• the variables piston surface $A$, volume $V_0$, compression modulus $K$ and time-dependent piston movement $\dot{x}_K$ and cylinder movement $\dot{x}_Z$ are determined by

• calculating the surface $A$ using a diameter measurement of the piston (8),
• defining the compression modulus $K$ using the fluid (11) that is used, using documented table values,
• determining the time-dependent piston movement $\dot{x}_K$ and the cylinder movement $\dot{x}_Z$
• calculating the volume $V_0$ using a pressure sensor (12, 20) that is not necessarily dynamically calibrated, wherein two measurements of the dynamic pressure sensor output signal $\dot{U}$ are performed in the cylinder (10), between which the output volume is varied, but the static admission pressure, represented by the static output signal $U$ at the pressure sensor (12; 20), is set so as to be the same, wherein a first measurement

14

is initially performed, wherein the piston movement and cylinder movement $\dot{x}_{K1}$, respectively $\dot{x}_{Z1}$, are measured, and a dynamic output parameter $\dot{U}_1$ at a frequency $f_1$ is determined at the pressure sensor (12; 20), and the volume of the cylinder is then changed by $\Delta V$, and a second measurement of the dynamic output parameter $\dot{U}_2$ is then performed at the same frequency $f_2 = f_1$, wherein the piston movement and cylinder movement $\dot{x}_{K2}$, respectively $\dot{x}_{Z2}$, are measured, these being necessary to obtain the same dynamic output parameter, that is to say $\dot{U}_1 = \dot{U}_2$, at the pressure sensor, and the volume V0 is then calculated using

$$V_0 = \frac{\Delta V}{\frac{(\dot{x}_{K2}+\dot{x}_{Z2})}{(\dot{x}_{K1}+\dot{x}_{Z1})}-1}\,.$$

15. Method according to one of Claims 8 to 13, **characterized in that** the variables piston surface A, volume $V_0$, compression modulus K and time-dependent piston movement $\dot{x}_K$ and cylinder movement $\dot{x}_Z$ are determined by

• calculating the surface $A$ using a diameter measurement of the piston (8),
• defining the compression modulus K using the fluid that is used, using documented table values,
• determining the time-dependent piston movement $\dot{x}_K$ and the cylinder movement $\dot{x}_Z$,
• calculating the volume $V_0$ using a pressure sensor (12; 20) that is not necessarily dynamically calibrated, but is necessarily statically calibrated,

• wherein, for the purpose of determining the volume $V_0$, the liquid fluid is replaced by a gaseous fluid,

• two measurements of the static pressure $p_1$ and $p_2$ are performed in the cylinder, between which the output volume is varied by $\Delta V$, wherein a first measurement is initially performed, from which the static output parameter $U_1$ at the pressure sensor (12; 20) is determined, that the volume of the cylinder (10) is changed by $\Delta V$ and a second measurement of the static output parameter $U_2$ is performed, and the volume $V_0$ is calculated using

$$V_0 = \frac{\Delta V}{\frac{p_2}{p_1}-1}\,.$$

16. Method according to Claim 15, **characterized in that**, by way of a separate adjusting piston (19) having a piston surface $A_{VK}$ that executes an adjustment movement with an adjustment travel $\Delta x_{VK}$, the volume $V_0$ is varied and calculated using

$$V_0 = \frac{A_{VK} \cdot \Delta x_{VK}}{\frac{p_2}{p_1}-1}\,.$$

17. Method according to one of Claims 9 to 13, **characterized in that** the time-dependent piston movement $\dot{x}_K$ and the cylinder movement $\dot{x}_Z$ are generated and detected by way of a measurement system (17, 18), the dynamic pressure function $\dot{p}$ is calculated using

$$\dot{p} = K \cdot \frac{A_K(\dot{x}_K + \dot{x}_Z)}{V_0} = C_1 \cdot (\dot{x}_K + \dot{x}_Z)$$

wherein $C_1$ is determined through two static measurements of the pressure, of a necessarily statically calibrated pressure sensor (12; 20) in relation to the respective piston displacement $\Delta x_K$ and cylinder displacement $\Delta x_Z$ and, from this, the pressure difference $\Delta p$ and the piston displacement $\Delta x_K$ and cylinder displacement $\Delta x_Z$ are determined and $C_1$ is calculated using

$$C_1 = \frac{\Delta p}{\Delta x_K + \Delta x_Z}\,.$$

**18.** Method according to one of Claims 9 to 17, **characterized in that** a subsequently primary-calibrated sensor (12) with a calibration value c, which is now known, is used as a first pressure sensor (12) for a secondary calibration of a second pressure sensor (20).

**Revendications**

**1.** Dispositif d'étalonnage dynamique de capteurs de pression comprenant un boîtier (6), comprenant un cylindre (10) relié au boîtier (6) et destiné à accueillir un fluide (11), lequel peut être relié par le biais d'une première ouverture (13) à un premier capteur de pression (12), qui se trouve ainsi en contact avec le fluide (11), un actionneur (4) et un piston (8) qui coopère avec le cylindre (10), l'actionneur (4) étant disposé entre le boîtier (6) et un côté (15) du piston (8) à l'opposé du cylindre (10), **caractérisé en ce**

- **que** le dispositif est déterminé du point de vue statique seulement par une liaison respective boîtier (6) - actionneur (4) et actionneur (4) - piston (8) en ce qu'il ne possède aucune liaison avec une masse plus grande, notamment aucune liaison avec une fondation,
- **que** l'actionneur est réalisé sous la forme d'un actionneur (4) piézoélectrique et
- **que** le piston (8) dans le cylindre (10) est rendu étanche par rapport à l'atmosphère ambiante par une garniture d'étanchéité (14) et disposé mobile dans la garniture d'étanchéité (14).

**2.** Dispositif selon la revendication 1, **caractérisé en ce que** lors d'une utilisation pour un étalonnage primaire, un système de mesure qui détecte un mouvement du piston (8) par rapport au boîtier (6) est monté.

**3.** Dispositif selon la revendication 2, **caractérisé en ce que** le système de mesure est configuré pour une détection de mouvements aussi bien dynamiques que statiques.

**4.** Dispositif selon la revendication 2 ou 3, **caractérisé en ce que** le système de mesure est réalisé sous la forme d'un capteur d'oscillations (16 ; 17) étalonné ou sous la forme d'un vibromètre à laser (21, 24) avec décodeur de vitesse et de course.

**5.** Dispositif selon la revendication 4, **caractérisé en ce que** l'actionneur (4) est réalisé sous la forme d'un actionneur creux (23) muni d'un passage de rayon à travers lequel le vibromètre à laser (21) est dirigé sur le piston.

**6.** Dispositif selon la revendication 1, **caractérisé en ce que** lors d'une utilisation pour un étalonnage secondaire, le cylindre (10), en vue d'accueillir un fluide, peut être relié à un deuxième capteur de pression (20) à étalonner secondairement.

**7.** Dispositif selon l'une des revendications 1 à 4, **caractérisé en ce qu'**une broche linéaire (16) qui génère une pression d'alimentation statique dans le cylindre (10) est montée.

**8.** Dispositif selon l'une des revendications 1 à 4, **caractérisé en ce qu'**un deuxième cylindre est présent, dans lequel est disposé un piston de réglage (19) rendu étanche par rapport à l'atmosphère ambiante et mobile dans le deuxième cylindre.

**9.** Procédé d'étalonnage dynamique de capteurs de pression conformément au dispositif selon la revendication 1, dans lequel un paramètre réel qui représente la pression agissant sur un capteur de pression (12) est mesuré et comparé à un paramètre de consigne correspondant et une valeur d'étalonnage c pour le paramètre réel est déterminée à partir de la comparaison, la pression étant générée au moyen d'un piston (8) qui coopère avec un cylindre (10), lequel est rempli d'un fluide (11) et se trouve en contact avec le capteur de pression (12) par le biais d'une première ouverture (13), un actionneur (4) et un piston (8) coopérant avec le cylindre (10), **caractérisé en ce que** la variation de pression $\Delta p$ correspondant à la valeur réelle est calculée au moyen de la valeur de compression K pour le fluide, de la surface de pression active $A_K$, du volume $V_0$ rempli de fluide (11) du cylindre (10), du mouvement du piston $\Delta x_K$ ainsi que du mouvement du cylindre $\Delta x_Z$ par

$$\Delta p = K \frac{A_K(\Delta x_K - \Delta x_Z)}{V_0}.$$

**10.** Procédé selon la revendication 9, **caractérisé en ce que** la pression $p_n$ est calculée pour différents déplacements du piston $x_{K(1)} \ldots x_{K(n)}$ et déplacements du cylindre $x_{Z(1)} \ldots x_{Z(n)}$ par

$$(p_n - p_{n-1}) = K \cdot \frac{A_K \cdot ((x_{K(n)} - x_{K(n-1)}) + (x_{Z(n)} - x_{Z(n-1)}))}{V_0}, \quad n \in \mathbb{N}.$$

**11.** Procédé selon la revendication 9 ou 10, **caractérisé en ce que** le mouvement du piston $\Delta x_K$ et le mouvement du cylindre $\Delta x_Z$ sont générés de manière dynamique, c'est-à-dire en tant que fonctions du temps $\dot{x}_K = dx_K/dt$ et $\dot{x}_Z = dxz/dt$ et la fonction de pression dynamique $\dot{p} = dp/dt$ est calculée par

$$\dot{p} = K \cdot \frac{A_K(\dot{x}_K + \dot{x}_Z)}{V_0}.$$

**12.** Procédé selon la revendication 11, **caractérisé en ce que** $\dot{x}_K$ et $\dot{x}_Z$ sont générées sous la forme d'une fonction sinusoïdale avec une fréquence f.

**13.** Procédé selon la revendication 12, **caractérisé en ce que** $\dot{x}_K$ et $\dot{x}_Z$ sont générées avec une fréquence variable, c'est-à-dire $\dot{x}_K(f)$ et $\dot{x}_Z(f)$, et la valeur d'étalonnage en tant que fonction c(f) par le biais d'un calcul d'une pression dépendante de la fréquence p(f).

**14.** Procédé selon l'une des revendications 9 à 13, caractérisé en ce

* qu'une pression dynamique qui est générée avec l'actionneur (4) est superposée à la pression dans le cylindre (10),
* que la détermination des grandeurs surface du piston A, volume $V_0$, module de compression K ainsi que du mouvement du piston $\dot{x}_K$ et du mouvement du cylindre $\dot{x}_Z$ dépendant du temps s'effectue par le biais

* d'un calcul de la surface A par le biais d'une mesure du diamètre du piston (8),
* d'une définition du module de compression K à l'aide du fluide (11) utilisé, à l'aide de valeurs tabulaires documentées,
* d'une détermination du mouvement du piston $\dot{x}_K$ et du mouvement du cylindre $\dot{x}_Z$ dépendant du temps,
* d'un calcul du volume $V_0$ en utilisant un capteur de pression (12, 20) non nécessairement étalonné dynamiquement, deux mesures du signal de sortie de capteur de pression dynamique $U$ dans le cylindre (10) étant effectuées, entre lesquelles le volume initial est modifié, la pression d'alimentation statique, représentée par le signal de sortie statique U au niveau du capteur de pression (12 ; 20), étant toutefois réglée à l'identique, une première mesure étant tout d'abord effectuée, le mouvement du piston et du cylindre $\dot{x}_{K1}$ et $\dot{x}_{Z1}$ étant mesuré et un paramètre de sortie dynamique $\dot{U}_1$ étant déterminé avec une fréquence $f_1$ au niveau du capteur de pression (12 ; 20), après quoi le volume du cylindre étant modifié de $\Delta V$ et une deuxième mesure du paramètre de sortie dynamique $\dot{U}_2$ étant ensuite effectuée avec la même fréquence $f_2 = f_1$, le mouvement du piston et du cylindre $\dot{x}_{K2}$ et $\dot{x}_{Z2}$ qui est nécessaire pour obtenir le même paramètre de sortie dynamique, c'est-à-dire $\dot{U}_1 = \dot{U}_2$ au niveau du capteur de pression étant mesuré, puis le volume $V_0$ étant ensuite calculé par

$$V_0 = \frac{\Delta V}{\frac{(\dot{x}_{K2} + \dot{x}_{Z2})}{(\dot{x}_{K1} + \dot{x}_{Z1})} - 1}.$$

**15.** Procédé selon l'une des revendications 8 à 13, **caractérisé en ce que** la détermination des grandeurs surface du piston A, volume $V_0$, module de compression K ainsi que du mouvement du piston $\dot{x}_K$ et du mouvement du cylindre $\dot{x}_Z$ dépendant du temps s'effectue par le biais

* d'un calcul de la surface A par le biais d'une mesure du diamètre du piston (8),
* d'une définition du module de compression K à l'aide du fluide utilisé, au moyen de valeurs tabulaires documentées,
* d'une détermination du mouvement du piston $\dot{x}_K$ et du mouvement du cylindre $\dot{x}_Z$ dépendant du temps,
* d'un calcul du volume $V_0$ en utilisant un capteur de pression (12 ; 20) non nécessairement étalonné dynamiquement, mais nécessairement étalonné de manière statique,

* à des fins de détermination du volume $V_0$, le fluide liquide est remplacé par un fluide gazeux,
* deux mesures de la pression statique $p_1$ et $p_2$ dans le cylindre sont effectuées, entre lesquelles le volume initial est modifié de $\Delta V$, une première mesure étant tout d'abord effectuée à partir de laquelle le paramètre de sortie statique $U_1$ au niveau du capteur de pression (12 ; 20) est déterminé, le volume du cylindre (10) est modifié de $\Delta V$ et une deuxième mesure du paramètre de sortie statique $U_2$ est effectuée, et le volume $V_0$ est calculé par

$$V_0 = \frac{\Delta V}{\frac{p_2}{p_1} - 1}.$$

16. Procédé selon la revendication 15, **caractérisé en ce que** le volume $V_0$ est modifié au moyen d'un piston de réglage (19) séparé, qui présente une surface de piston $A_{VK}$ et exécute un mouvement de réglage avec une course de réglage $\Delta x_{VK}$, puis calculé par

$$V_0 = \frac{A_{VK} \cdot \Delta x_{VK}}{\frac{p_2}{p_1} - 1}.$$

17. Procédé selon l'une des revendications 9 à 13, **caractérisé en ce que** le mouvement du piston $\dot{x}_K$ et le mouvement du cylindre $\dot{x}_Z$ dépendant du temps sont générés et détectés au moyen d'un système de mesure (17, 18), la fonction de pression dynamique $\dot{p}$ est calculée par

$$\dot{p} = K \cdot \frac{A_K (\dot{x}_K + \dot{x}_Z)}{V_0} = C_1 \cdot (\dot{x}_K + \dot{x}_Z),$$

$C_1$ étant déterminé par deux mesures statiques de la pression d'un capteur de pression (12 ; 20) nécessairement étalonné de manière statique en relation avec le mouvement du piston $\Delta x_K$ et le mouvement du cylindre $\Delta x_Z$ respectifs, et à partir de cela la différence de pression $\Delta p$ ainsi que le mouvement du piston $\Delta x_K$ et le mouvement du cylindre $\Delta x_Z$ sont déterminés et $C_1$ est calculé par

$$C_1 = \frac{\Delta p}{\Delta x_K + \Delta x_Z}.$$

18. Procédé selon l'une des revendications 9 à 17, **caractérisé en ce qu'**un capteur (12) ayant fait l'objet d'un étalonnage primaire avec une valeur d'étalonnage c à présent connue est utilisé comme premier capteur de pression (12) pour un étalonnage secondaire d'un deuxième capteur de pression (20).

# FIG 1
## (Stand der Technik)

Frequenzgang Schwingungssensor

# FIG 2
## (Stand der Technik)

# FIG 3
## (Stand der Technik)

# FIG 4
## (Stand der Technik)

Kolben

$m_1$

8

Aktor + Öl + Metallmembran
Steifigkeit / Dämpfung

4

Fundament - Einspannung

7

# FIG 5
## (Stand der Technik)

11

Gehäuse

Traverse-Rahmen

Öl

6

9

Kolben

8

piezoelektrischer
Aktor

4

Fundament

7

## FIG 6

## FIG 7

## FIG 8

Druck - Zeit Verlauf

## FIG 9

4

6

Gehäuse

Aktor

15

8

Beschleunigungssensor Kolben

17

14

Kolben

Öl

19

Drucksensor 2

Verstellkolben

13

10

11

12

18

Drucksensor 1

Beschleunigungssensor Gehäuse

**FIG 10**

21

Referenz
Laservibrometer
Kolben

22

6

23

Aktor

Gehäuse

15

8

14

20

Kolben

Öl

19

Drucksensor 2

Verstellkolben

13

10   11

12
Drucksensor 1

Referenz
Laservibrometer
25 Gehäuse

24

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3590626 A
- DE 102009027624 A1

- WO 2013110255 A1

### In der Beschreibung aufgeführte Nicht-Patentliteratur

- **KUHN.** *Werthschützky: Analysis of Dynamic Charatkeristics of Pressure Sensors*
- **STEFAN SINDLINGER.** Einfluss der Gehäusung auf die Messunsicherheit von mikrogehäusten Drucksensoren mit piezoresistivem Messelement. *Dissertation,* 2007
- **SVEN KUHN.** Messunsicherheit elektromechanischer Wirkprinzipien zur Druckmessung und Optimierung von Verfahren zur Fehlerkorrektur. *Dissertation,* 2001

- **TIMO KOBER.** Analyse des Übertragungsverhaltens von Differenzdrucksensoren durch dynamische Druckkalibrierung. *Artikel Technisches Messen,* Februar 2010
- **LUCA TOMASI.** A new micromachined piezoresistive pressure sensor with dual range and self-test functionalities. *Dissertation,* 2007
- **ADAM HURST.** An Experimental Frequency Response Characterization of MEMS Piezoresistive Pressure Transducers. *Proceedings of ASME Turbo Expo 2014: Turbine Technical Conference and Exposition,* 2014